# EUROPÄISCHE PATENTSCHRIFT

(11) **EP 3 999 415 B1**
(45) Veröffentlichungstag und Bekanntmachung des Hinweises auf die Patenterteilung: **14.02.2024**
(21) Anmeldenummer: 20742194.2
(22) Anmeldetag: 10.07.2020
(51) Int. Cl.: B64C 1/06, B64C 1/14, B64D 11/00, E05D 3/18

(54) **BEFESTIGUNGSSYSTEM ZUR BEFESTIGUNG EINES BAUTEILS, BAUTEILANORDNUNG UND LUFTFAHRZEUG**
FASTENING SYSTEM FOR FASTENING A COMPONENT, COMPONENT ARRANGEMENT, AND AIRCRAFT
SYSTÈME DE FIXATION POUR LA FIXATION D'UNE PIÈCE, AGENCEMENT DE PIÈCE ET AÉRONEF

(30) Priorität: 19.07.2019 DE 102019119643
(43) Veröffentlichungstag der Anmeldung: 25.05.2022
(73) Patentinhaber: Airbus Operations GmbH, 21129 Hamburg (DE)
(72) Erfinder: EGGERT, Philipp, 51643 Gummersbach (DE); MARCULESCU, Bogdan-Florin, 21079 Hamburg (DE)
(74) Vertreter: Schicker, Silvia
(86) Internationale Anmeldenummer: PCT/EP2020/069558
(87) Internationale Veröffentlichungsnummer: WO 2021/013583

(56) Entgegenhaltungen:
- WO-A1-2008/130124
- GB-A- 496 829
- GB-A- 2 450 251
- US-A- 4 490 883
- US-A- 5 201 831
- US-A1- 2016 009 356

## Beschreibung

Die Erfindung betrifft ein Befestigungssystem, das insbesondere dazu geeignet ist, ein Bauteil, insbesondere ein Deckenpaneel, in einem Luftfahrzeug zu montieren. Ferner betrifft die Erfindung eine mit einem derartigen Befestigungssystem ausgestattete Bauteilanordnung. Schließlich betrifft die Erfindung ein mit einem derartigen Befestigungssystem und/oder einer derartigen Bauteilanordnung ausgestattetes Luftfahrzeug.

In modernen Verkehrsflugzeugen ist im Deckenbereich der Kabine hinter einen Passagierbereich der Kabine nach oben abgrenzenden Deckenpaneelen üblicherweise eine Vielzahl von Leitungen, beispielsweise elektrische Leitungen sowie Leitungen der Flugzeugklimaanlage verlegt. Ferner wird der hinter den Deckenpaneelen liegende Bereich der Kabine als Einbauraum für diverse Komponenten, insbesondere elektronische Komponenten genutzt. Um diese Leitungen und Komponenten für Reparatur- oder Wartungsarbeiten zugänglich zu machen, müssen die Deckenpaneele aus ihrer Montageposition, die sie im Normalbetrieb des Flugzeugs einnehmen, entfernt werden. Darüber hinaus können auch in die Deckenpaneele selbst Komponenten integriert sein, deren Reparatur oder Wartung eine Demontage der Deckenpaneele erfordert. Je nach Anordnung der Deckenpaneele innerhalb der Flugzeugkabine kann die Demontage der Deckenpaneele durch zu den Deckenpaneelen benachbarte Einbauten, wie zum Beispiel Monumente, erschwert werden.

Die GB 469,829 beschreibt ein Befestigungselement, das dazu eingerichtet ist, ein Fenster in einem Fensterrahmen zu befestigen. Das Befestigungselement umfasst einen Arm, der drehbar sowohl mit dem Fensterrahmen als auch mit dem Fenster verbunden ist. Ein weiterer Arm ist an einem ersten Ende drehbar mit dem Fensterrahmen verbunden. Ein zweites Ende des weiteren Arms ist in einem Schlitz verschiebbar, der in einer an dem Fensterrahmen befestigten Platte ausgebildet ist.

Die WO 2008/130124 A1 beschreibt eine Scharnieranordnung zur Befestigung einer Kühlschranktür an einem Kühlschrankgehäuse.

Die US 5,201,831 A, die US 4,490,883 A, die US 2016/000956 A1 sowie die GB 2 450 021 A betreffen jeweils Scharnieranordnungen zur Befestigung von Deckenpaneelen in einem Flugzeug.

Der Erfindung liegt die Aufgabe zugrunde, ein Befestigungssystem bereitzustellen, das dazu geeignet ist, ein Bauteil, insbesondere ein Deckenpaneel derart zu montieren, dass das Bauteil bei Bedarf einfach demontiert werden kann, um einen hinter dem Bauteil liegenden Raum, beispielsweise für Reparatur- oder Wartungsarbeiten zugänglich zu machen. Ferner ist die Erfindung auf die Aufgabe gerichtet, eine mit einem derartigen Befestigungssystem ausgestattete Bauteilanordnung sowie ein mit einem derartigen Befestigungssystem und/oder einer derartigen Bauteilanordnung ausgestattetes Luftfahrzeug anzugeben.

Diese Aufgabe wird durch ein Befestigungssystem mit den Merkmalen des Anspruchs 1, eine Bauteilanordnung mit den Merkmalen des Anspruchs 12 und ein Luftfahrzeug mit den Merkmalen des Anspruchs 14 gelöst.

Ein Befestigungssystem umfasst ein Strukturhalteelement, das an einem Strukturbauteil befestigbar ist. Ferner umfasst das Befestigungssystem ein Bauteilhalteelement, das an einem zu befestigenden Bauteil befestigbar ist. Beispielsweise kann das Strukturhalteelement zur Befestigung an einem Strukturbauteil vorgesehen sein, das in Form eines Primärstrukturbauteils eines Luftfahrzeugs oder in Form eines lastübertragend mit der Primärstruktur des Luftfahrzeugs verbundenen Strukturbauteils ausgebildet sein kann. Das Bauteilhalteelement kann dagegen zur Befestigung an einem beispielsweise in Form eines Luftfahrzeuginnenausstattungsbauteils insbesondere eines Deckenpaneels ausgebildeten Bauteil vorgesehen sein. Das Bauteilhalteelement ist relativ zu dem Strukturhalteelement zwischen einer ersten Betriebsposition und einer zweiten Betriebsposition bewegbar.

Wenn das Bauteilhalteelement relativ zu dem Strukturhalteelement in seiner ersten Betriebsposition angeordnet ist, befindet sich ein mit dem Bauteilhalteelement verbundenes Bauteil vorzugsweise in einer Normalbetriebsposition. Wenn es sich bei dem mit dem Bauteilhalteelement verbundenen Bauteil um ein Luftfahrzeugdeckenpaneel handelt, kann das Bauteil in seiner Normalbetriebsposition in üblicher Weise im Deckenbereich einer Luftfahrzeugkabine angeordnet sein und einen zwischen dem Bauteil und einer Luftfahrzeugaußenhaut liegenden Komponenteneinbauraum von einem Passagierbereich der Luftfahrzeugkabine trennen. Im Gegensatz dazu kann sich ein mit dem Bauteilhalteelement verbundenes Bauteil in einer Zugangsbetriebsposition befinden, wenn das Bauteilhalteelement relativ zu dem Strukturhalteelement in seiner zweiten Betriebsposition angeordnet ist. Ein in Form eines Luftfahrzeugdeckenpaneels ausgebildetes Bauteil gibt in seiner Zugangsposition vorzugsweise einen Zugang aus dem Passagierbereich der Luftfahrzeugkabine zu dem zwischen dem Bauteil und der Luftfahrzeugaußenhaut liegenden Komponenteneinbauraum frei. Dadurch werden Reparatur- und Wartungsarbeiten an den in dem Komponenteneinbauraum verbauten Komponenten ermöglicht.

Das Befestigungssystem umfasst ein erstes Hebelelement, das um eine erste Drehachse drehbar mit dem Strukturhalteelement verbunden ist. Ferner ist das erste Hebelelement um eine zweite Drehachse drehbar mit dem Bauteilhalteelement verbunden. Insbesondere kann das erste Hebelelement im Bereich eines ersten Endes um die erste Drehachse drehbar mit dem Strukturhalteelement verbunden sein. Im Bereich eines dem ersten Ende entgegengesetzten zweiten Endes ist das erste Hebelelement dagegen vorzugsweise um die zweite Drehachse drehbar mit dem Bauteilhalteelement verbunden. Bei einer Überführung des Bauteilhalteelements aus seiner ersten Betriebsposition in seine zweite Betriebsposition wird das erste Hebelelement vorzugsweise sowohl um die erste Drehachse relativ zu dem Strukturhalteelement gedreht als auch um die zweite Drehachse relativ zu dem Bauteilhalteelement gedreht.

Schließlich umfasst das Befestigungssystem ein Verbindungselement, das, genauso wie das erste Hebelelement, sowohl mit dem Bauteilhalteelement als auch mit dem Strukturhalteelement verbunden ist. Mit dem Bauteilhalteelement ist das Verbindungselement um eine dritte Drehachse drehbar verbunden. Vorzugsweise führt das Verbindungselement bei einer Überführung des Bauteilhalteelements aus seiner ersten Betriebsposition in seine zweite Betriebsposition eine Drehung um die dritte Drehachse aus. Die erste, die zweite und die dritte Drehachse können sich im Wesentlichen parallel zueinander erstrecken.

Im Gegensatz dazu ist das Verbindungselement mit dem Strukturhalteelement derart translatorisch relativ zu dem Strukturhalteelement verschiebbar verbunden, dass die zweite Drehachse bei einer Überführung des Bauteilhalteelements aus seiner ersten Betriebsposition in seine zweite Betriebsposition in einer Ebene verschoben wird, die sich senkrecht zu der zweiten Drehachse erstreckt. Ein mit dem Bauteilhalteelement verbundenes und mittels des Befestigungssystems an einem Strukturbauteil im Deckenbereich eines Luftfahrzeugs montiertes Bauteil kann dementsprechend bei einer Überführung des Bauteilhalteelements aus seiner ersten Betriebsposition in seine zweite Betriebsposition ebenfalls in der sich senkrecht zu der zweiten Drehachse erstreckenden Ebene verschoben und gleichzeitig um die zweite Drehachse relativ zu dem Strukturhalteelement gedreht bzw. geschwenkt werden. Dadurch kann das Bauteil auch dann auf einfache und komfortable Art und Weise aus seiner Normalbetriebsposition in seine Zugangsposition überführt werden, wenn benachbart zu dem Bauteil verbaute Elemente, wie zum Beispiel Monumente oder dergleichen, den Bewegungsfreiraum des Bauteils bei der Überführung aus seiner Normalbetriebsposition in seine Zugangsposition einengen und beispielsweise eine reine Schwenkbewegung des Bauteils um die zweite Drehachse des Befestigungssystems behindern würden.

Das Verbindungselement kann derart translatorisch relativ zu dem Strukturhalteelement verschiebbar mit dem Strukturhalteelement verbunden sein, dass die zweite Drehachse bei einer Überführung des Bauteilhalteelements aus seiner ersten Betriebsposition in seine zweite Betriebsposition in der Ebene entlang einer kreisbogenförmigen Bewegungsbahn bewegt wird. Ein Abschnitt eines mit dem Bauteilhalteelement verbundenen und mittels des Befestigungssystems an einem Strukturbauteil im Deckenbereich eines Luftfahrzeugs montierten Bauteils kann dann bei einer Überführung des Bauteilhalteelements aus seiner ersten Betriebsposition in seine zweite Betriebsposition ebenfalls entlang einer kreisbogenförmigen Bewegungsbahn relativ zu dem Strukturhalteelement bewegt werden. Gleichzeitig kann das Bauteil um die zweite Drehachse relativ zu dem Strukturhalteelement gedreht bzw. geschwenkt werden.

Ferner kann das Verbindungselement derart translatorisch relativ zu dem Strukturhalteelement verschiebbar mit dem Strukturhalteelement verbunden sein, dass sich bei einer Überführung des Bauteilhalteelements aus seiner ersten Betriebsposition in seine zweite Betriebsposition ein erster Abstand zwischen der ersten und der zweiten Drehachse in einer zu der ersten und der zweiten Drehachse senkrechten ersten Richtung verkleinert und ein zweiter Abstand zwischen der ersten und der zweiten Drehachse in einer zu der ersten und der zweiten Drehachse sowie der ersten Richtung senkrechten zweiten Richtung vergrößert. Mit anderen Worten, das Verbindungselement kann bei einer Überführung des Bauteilhalteelements aus seiner ersten Betriebsposition in seine zweite Betriebsposition relativ zu dem Strukturhalteelement eine translatorische Bewegung ausführen, durch die ein mit dem Verbindungselement verbundener Bereich des Bauteilhalteelements von dem Strukturhalteelement entfernt wird. Dadurch vergrößert sich der erste Abstand zwischen der ersten und der zweiten Drehachse in der zu der zweiten Drehachse senkrechten ersten Richtung.

Gleichzeitig resultieren die Drehbewegung des ersten Hebelelements um die erste Drehachse und die Drehbewegung des ersten Hebelelements um die zweite Drehachse in einer Annäherung der zweiten Drehachse an die erste Drehachse in der zu der zweiten Drehachse und der ersten Richtung senkrechten zweiten Richtung. Ein mit dem Bauteilhalteelement verbundenes und mittels des Befestigungssystems an einem Strukturbauteil im Deckenbereich eines Luftfahrzeugs montiertes Bauteil kann dementsprechend bei einer Überführung des Bauteilhalteelements aus seiner ersten Betriebsposition in seine zweite Betriebsposition gleichzeitig zu seiner Drehung um die zweite Drehachse in der zweiten Richtung von dem Strukturbauteil (nach unten) wegbewegt und in der ersten Richtung (nach vorne) auf die erste Drehachse zu bewegt werden.

Das Verbindungselement ist derart translatorische relativ zu dem Strukturhalteelement verschiebbar mit dem Strukturhalteelement verbunden, dass eine translatorische Bewegungsbahn, entlang derer das Verbindungselement bei einer Überführung des Bauteilhalteelements aus seiner ersten Betriebsposition relativ zu dem Strukturhalteelement verschoben wird, eine Verlängerung der ersten Drehachse schneidet. Dies ermöglicht ein kompaktes Design des Befestigungssystems.

Das Strukturhalteelement kann ein Basiselement umfassen. Ferner kann das Strukturhalteelement ein zweites Hebelelement umfassen. Das erste Hebelelement kann um die erste Drehachse drehbar mit dem zweiten Hebelelement verbunden sein, d.h. das erste Hebelelement kann über das zweite Hebelelement um die erste Drehachse drehbar mit dem Strukturhalteelement verbunden sein. Bei einer Überführung des Bauteilhalteelements aus seiner ersten Betriebsposition in seine zweite Betriebsposition vergrößert sich vorzugsweise ein zwischen dem ersten und dem zweiten Hebelelement definierter Winkel. Beispielsweise kann der zwischen dem ersten und dem zweiten Hebelelement definierte Winkel zwischen 50 und 70°, insbesondere ca. 60° sein, wenn sich das Bauteilhalteelement in seiner ersten Betriebsposition befindet. Im Gegensatz dazu kann der zwischen dem ersten und dem zweiten Hebelelement definierte Winkel zwischen 100 und 120°, insbesondere ca. 110° sein, wenn sich das Bauteilhalteelement in seiner zweiten Betriebsposition befindet. Die zwischen dem ersten und dem zweiten Hebelelement definierten Winkel in der ersten und der zweiten Betriebsposition des Bauteilhalteelements sind jedoch Designparameter, die entsprechend den Gegebenheiten, beispielsweise den Dimensionen des mit dem Bauteilhalteelements zu verbindenden Bauteils sowie des gewünschten Bewegungsumfangs des Bauteilhalteelements relativ zu dem Strukturhalteelement angepasst werden können.

Das zweite Hebelelement kann starr mit dem Basiselement verbunden sein. Alternativ dazu kann das zweite Hebelelement auch integriert mit dem Basiselement ausgeführt sein. Beispielsweise kann das zweite Hebelelement zwei Arme umfassen, die im Bereich ihrer von dem Basiselement abgewandten freien Enden durch die erste Drehachse miteinander verbunden sein können.

Das Basiselement kann einen mit dem zweiten Hebelelement verbundenen ersten Abschnitt umfassen. Ferner kann das Basiselement einen zweiten Abschnitt umfassen, der sich im Wesentlichen senkrecht zu dem ersten Abschnitt erstreckt. Das zweite Hebelelement kann sich beispielsweise von einer dem zweiten Abschnitt des Basiselements zugewandten ersten Oberfläche des ersten Abschnitts des Basiselements erstrecken. Der erste Abschnitt des Basiselements kann ferner eine seiner ersten Oberfläche gegenüberliegende zweite Oberfläche haben, die sich vorzugsweise im Wesentlichen parallel zu der ersten Oberfläche erstreckt. Der zweite Abschnitt des Basiselements kann ebenfalls eine seiner ersten Oberfläche gegenüberliegende zweite Oberfläche haben. Wenn das Strukturhalteelement an einem Strukturbauteil befestigt ist, kann die zweite Oberfläche des zweiten Abschnitts des Basiselements an dem Strukturbauteil anliegen, während die erste Oberfläche des Basiselements von dem Strukturbauteil abgewandt und dem ersten Abschnitt des Basiselements zugewandt ist. Die erste und die zweite Oberfläche des zweiten Abschnitts des Basiselements erstrecken sich vorzugsweise im Wesentlichen parallel zueinander.

Vorzugsweise ist zumindest ein Abschnitt des Verbindungselements verschiebbar in einer an dem Strukturhalteelement ausgebildeten Führungsschiene aufgenommen. Die Führungsschiene kann mindestens eine Nut umfassen, die mit einem an dem Verbindungselement vorgesehenen Vorsprung zusammenwirkt, um die Bewegung des Verbindungselements relativ zu dem Strukturhalteelement zu führen. Zusätzlich oder alternativ dazu kann an der Führungsschiene auch mindestens ein Vorsprung vorgesehen sein, der mit einer an dem Verbindungselement ausgebildeten Nut zusammenwirkt, um die Bewegung des Verbindungselements relativ zu dem Strukturhalteelement zu führen.

Vorzugsweise ist die Führungsschiene an dem zweiten Abschnitt des Basiselements und insbesondere an der ersten Oberfläche des zweiten Abschnitts des Basiselements des Strukturhalteelements angebracht. Zur Führung der translatorischen Bewegung des Verbindungselements relativ zu dem Strukturhalteelement derart, dass die zweite Drehachse bei der Überführung des Bauteilhalteelements aus seiner ersten Betriebsposition in seine zweite Betriebsposition in der zu der zweiten Drehachse senkrechten Ebene verschoben wird, erstreckt sich die Führungsschiene vorzugsweise ebenfalls in der zu der zweiten Drehachse senkrechten Ebene. Insbesondere dann, wenn das Verbindungselement derart translatorisch relativ zu dem Strukturhalteelement verschiebbar mit dem Strukturhalteelement verbunden ist, dass die translatorische Bewegungsbahn, entlang derer das Verbindungselement bei einer Überführung des Bauteilhalteelements aus seiner ersten Betriebsposition relativ zu dem Strukturhalteelement verschoben wird, eine Verlängerung der ersten Drehachse schneidet, schneidet vorzugsweise auch die Führungsschiene die Verlängerung der ersten Drehachse.

Das Bauteilhalteelement umfasst vorzugsweise eine Grundplatte, die eine erste Oberfläche sowie eine der ersten Oberfläche gegenüberliegende zweite Oberfläche haben kann. Wenn das Bauteilhalteelement an einem Bauteil befestigt ist, kann die zweite Oberfläche der Grundplatte an dem Bauteil anliegen, während die erste Oberfläche der Grundplatte von dem Bauteil abgewandt ist. Die erste und die zweite Oberfläche der Grundplatte erstrecken sich vorzugsweise im Wesentlichen parallel zueinander.

Ferner kann das Bauteilhalteelement eine mit dem ersten Hebelelement verbundene erste Aufnahmeeinrichtung umfassen. Die erste Aufnahmeeinrichtung erstreckt sich vorzugsweise von der ersten Oberfläche der Grundplatte des Bauteilhalteelements, die von dem Bauteil abgewandt ist, wenn das Bauteilhalteelement an einem Bauteil befestigt ist. Schließlich kann das Bauteilhalteelement eine mit dem Verbindungselement verbundene zweite Aufnahmeeinrichtung umfassen, die sich, ähnlich wie die erste Aufnahmeeinrichtung, von der ersten Oberfläche der Grundplatte des Bauteilhalteelements erstrecken kann.

Bei einer Überführung des Bauteilhalteelements aus seiner ersten Betriebsposition in seine zweite Betriebsposition vergrößert sich vorzugsweise ein Winkel, den das erste Hebelelement mit der Grundplatte des Bauteilhalteelements bildet. Beispielsweise kann sich der Winkel, den das erste Hebelelement mit der Grundplatte des Bauteilhalteelements bildet, bei der Überführung des Bauteilhalteelements aus seiner ersten Betriebsposition in seine zweite Betriebsposition von ca. 30° auf ca. 65° vergrößern. Im Gegensatz dazu resultiert eine Überführung des Bauteilhalteelements aus seiner ersten Betriebsposition in seine zweite Betriebsposition vorzugsweise in einer Verkleinerung des Winkels, den das Verbindungselement mit der Grundplatte des Bauteilhalteelements bildet. Beispielsweise kann sich der Winkel, den das Verbindungselement mit der Grundplatte des Bauteilhalteelements bildet, von ca. 80° auf ca. 25° verkleinern. Die zwischen dem ersten Hebelelement bzw. dem Verbindungselement und der Grundplatte des Bauteilhalteelements definierten Winkel in der ersten und der zweiten Betriebsposition des Bauteilhalteelements sind jedoch Designparameter, die entsprechend den Gegebenheiten, beispielsweise den Dimensionen des mit dem Bauteilhalteelements zu verbindenden Bauteils sowie des gewünschten Bewegungsumfangs des Bauteilhalteelements relativ zu dem Strukturhalteelement angepasst werden können.

Die erste Aufnahmeeinrichtung umfasst vorzugsweise zwei sich im Wesentlichen parallel zueinander erstreckende Arme. Im Bereich ihrer von der Grundplatte des Bauteilhalteelements abgewandten freien Enden sind die Arme der ersten Aufnahmeeinrichtung vorzugsweise durch die zweite Drehachse miteinander verbunden. Im Gegensatz dazu kann die zweite Aufnahmeeinrichtung lediglich einen Arm umfassen, der im Bereich seines von der Grundplatte des Bauteilhalteelements abgewandten freien Endes mit dem Verbindungselement verbunden ist.

Das Befestigungssystem umfasst vorzugsweise ferner ein Verriegelungssystem, das dazu eingerichtet ist, das Bauteil lösbar in seiner Normalbetriebsposition zu verriegeln. In einer bevorzugten Ausführungsform des Befestigungssystems ist das Befestigungssystem bzw. mindestens ein Befestigungssystem dazu eingerichtet, das Bauteil im Bereich eines ersten Randabschnitts des Bauteils mit dem Strukturbauteil zu verbinden. In Abhängigkeit der Abmessungen, d.h. der Länge des ersten Randabschnitts des Bauteils können entlang des ersten Randabschnitts des Bauteils mehrere Befestigungssysteme vorgesehen werden. Das Verriegelungssystem ist dann vorzugsweise dazu eingerichtet, das Bauteil im Bereich eines dem ersten Randabschnitt des Bauteils gegenüberliegenden zweiten Randabschnitts des Bauteils lösbar in seiner Normalbetriebsposition zu verriegeln.

Das Verriegelungssystem kann ein erstes Verriegelungselement umfassen, das im Bereich des zweiten Randabschnitts des Bauteils mit dem Bauteil verbindbar ist. Ferner kann das Verriegelungssystem ein zu dem ersten Verriegelungselement komplementäres zweites Verriegelungselement umfassen, das an einer Strukturkomponente anbringbar ist. Bei der Strukturkomponente kann es sich um eine Komponente der Primärstruktur eines Luftfahrzeugs, aber auch um eine lastübertragend mit der Primärstruktur des Luftfahrzeugs verbundene Komponente handeln. In Abhängigkeit der Abmessungen, d. h. der Länge des zweiten Randabschnitts des Bauteils können entlang des zweiten Randabschnitts des Bauteils mehrere Verriegelungssysteme vorgesehen werden.

Eine Entriegelung des Verriegelungssystems bewirkt eine Lösung des Bauteils, d. h. eine Lösung des zweiten Randabschnitts des Bauteils von der Strukturkomponente. Dadurch kann der zweite Randabschnitt des Bauteils relativ zu der Strukturkomponente verschwenkt werden. Wenn es sich bei dem Bauteil um ein Deckenpaneel handelt, schwenkt das Bauteil bei einer Lösung des Verriegelungssystems relativ zu der Strukturkomponente nach unten. Im Bereich seines ersten Randabschnitts bleibt das Bauteil jedoch durch das Befestigungssystem an dem Strukturbauteil fixiert. Die Kinematik des Befestigungssystems wird jedoch derart aktiviert, dass das Bauteilhalteelement des Befestigungssystems aus seiner ersten Betriebsposition in seine zweite Betriebsposition überführt wird. Infolgedessen wird auch das Bauteil, wie oben beschrieben, gleichzeitig zu seiner Drehung um die zweite Drehachse in der zweiten Richtung von dem Strukturbauteil (nach unten) wegbewegt und in der ersten Richtung (nach vorne) auf die erste Drehachse zu aus seiner Normalbetriebsposition in seine Zugangsposition bewegt.

Das Befestigungssystem kann ferner ein Halteband mit einem ersten Ende und einem zweiten Ende umfassen. Das erste Ende des Haltebands kann mit dem Bauteil verbindbar sein. Das zweite Ende des Haltebands kann dagegen mit einer Strukturkomponente verbindbar sein. Bei der Strukturkomponente kann es sich um die gleiche Strukturkomponente handeln, mit der auch das zweite Verriegelungselement des Verriegelungssystems verbindbar ist. Alternativ dazu kann das zweite Ende des Haltebands jedoch auch an einer anderen Strukturkomponente anbringbar sein. Das Halteband ist vorzugsweise dazu eingerichtet, bei einer Überführung des Bauteils aus seiner Normalbetriebsposition in seine Zugangsposition die Bewegung des Bauteils relativ zu dem Strukturbauteil zu begrenzen.

Das Halteband ist besondere im Bereich des zweiten Randabschnitts des Bauteils mit dem Bauteil verbindbar, der dem mit dem Bauteilhalteelement des Befestigungssystems verbindbaren ersten Randabschnitt des Bauteils gegenüberliegt. Das Halteband kann dann auf einfache Art und Weise die Klapp- bzw. Schwenkbewegung begrenzen, die das Bauteil relativ zu dem Strukturbauteil ausführt, wenn das Bauteil nach einer Entriegelung des Verriegelungssystems aus seiner Normalbetriebsposition in seine Zugangsposition bewegt wird. Vorzugsweise ist das Halteband in Form eines ausziehbaren Haltebands ausgebildet. Insbesondere ist das Halteband auch mit einer automatischen Einzugsfunktion ausgebildet, die für eine automatische Verkürzung des Haltebands sorgt, wenn das Bauteil wieder aus seiner Zugangsposition in seine Normalbetriebsposition zurückbewegt wird.

Eine Bauteilanordnung umfasst ein Bauteil und ein Strukturbauteil. Das Bauteil ist mittels eines oben beschriebenen Befestigungssystems zwischen einer Normalbetriebsposition und einer Zugangsposition bewegbar an dem Strukturbauteil befestigt. Insbesondere kann das mittels des Befestigungssystems an dem Strukturbauteil befestigte Bauteil durch eine Überführung des Bauteilhalteelements des Befestigungssystems aus seiner ersten Betriebsposition in seine zweite Betriebsposition aus seiner Normalbetriebsposition in seine Zugangsposition bewegt werden. Bei dem Bauteil kann es sich beispielsweise um ein zur Montage einer Luftfahrzeugkabine vorgesehenes Deckenpaneel handeln. Insbesondere kann das Deckenpaneel zur Installation in einem Türbereich eines Luftfahrzeugs vorgesehen sein. Das Strukturbauteil kann ein Teil einer Primärstruktur des Luftfahrzeugs oder ein lastübertragend an der Primärstruktur des Luftfahrzeugs befestigtes Strukturbauteil sein.

Vorzugsweise verbindet das Befestigungssystem das Bauteil im Bereich des ersten Randabschnitts des Bauteils mit dem Strukturbauteil. Das Verriegelungssystem und/oder das Halteband des Befestigungssystems verbinden das Bauteil dagegen vorzugsweise im Bereich des dem ersten Randabschnitt gegenüber liegenden zweiten Randabschnitts des Bauteils mit einer oder mehreren Strukturkomponente(n).

Ein Luftfahrzeug umfasst ein oben beschriebenes Befestigungssystem und/oder eine oben beschriebene Bauteilanordnung.

Bevorzugte Ausführungsbeispiele der Erfindung werden nun anhand der beigefügten schematischen Zeichnungen näher erläutert, wobei:
- Figur 1: eine Bauteilanordnung mit einem in Form eines Luftfahrzeugdeckenpaneels ausgebildeten Bauteil zeigt, das durch ein Befestigungssystem an einem Strukturbauteil befestigt ist, wobei sich ein Bauteilhalteelement des Befestigungssystems in einer ersten Betriebsposition befindet und sich das Bauteil in einer Normalbetriebsposition befindet;
- Figur 2: die Bauteilanordnung gemäß Figur 1 zeigt, wobei sich jedoch das Bauteilhalteelement des Befestigungssystems in einer zweiten Betriebsposition befindet und sich das Bauteil in einer Zugangsposition befindet;
- Figur 3: die Überführung des Bauteilhalteelements des Befestigungssystems aus seiner ersten Betriebsposition in seine zweite Betriebsposition veranschaulicht;
- Figur 4: die Überführung des Bauteils aus seiner Normalbetriebsposition in seine Zugangsposition veranschaulicht;
- Figur 5: eine Einbauumgebung der Bauteilanordnung gemäß Fig. 1 in einem Luftfahrzeug zeigt; und
- Figur 6: ein mit einer Bauteilanordnung gemäß Fig. 1 ausgestattetes Luftfahrzeug zeigt.

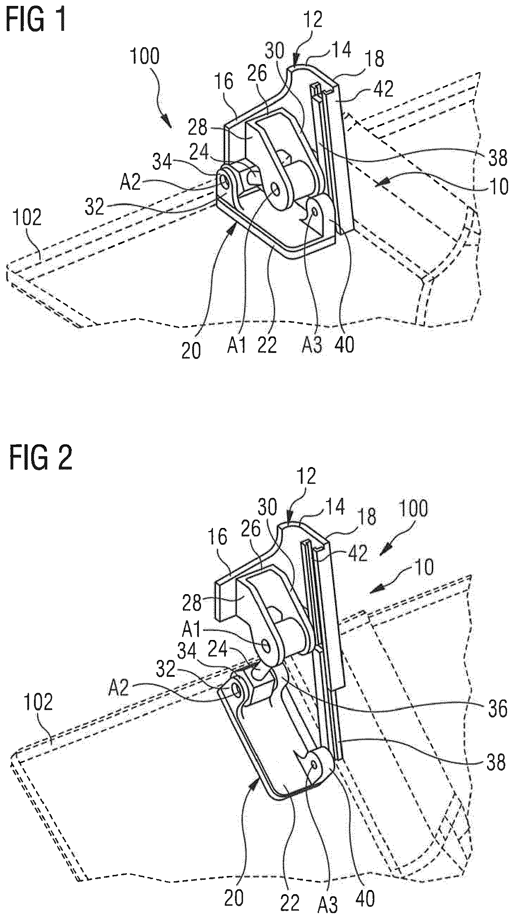

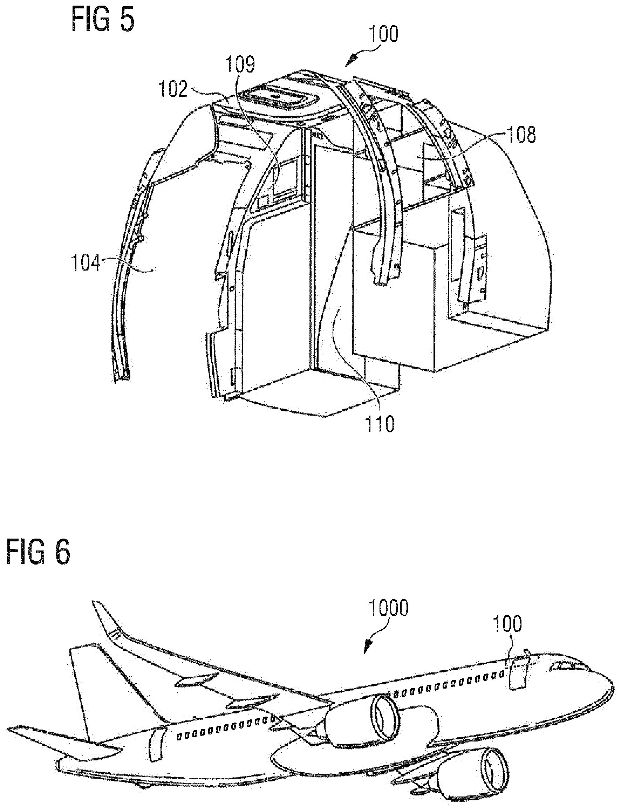

Die Figuren 1 bis 5 zeigen jeweils eine Bauteilanordnung 100, die ein Bauteil 102, ein Strukturbauteil 104 sowie ein Befestigungssystem 10 umfasst. In der Bauteilanordnung 100 dient das Befestigungssystem 10 dazu, das beispielsweise in Form eines Deckenpaneels ausgebildetes Luftfahrzeuginnenausstattungsbauteil 102 mit dem Strukturbauteil 104 zu verbinden. Bei dem Strukturbauteil 104 kann es sich um eine Komponente einer Primärstruktur eines mit der Bauteilanordnung 100 ausgestatteten Luftfahrzeugs 1000 (siehe Fig. 6) handeln. Alternativ dazu kann das Strukturbauteil 104 jedoch auch ein lastübertragend an der Primärstruktur des Luftfahrzeugs 1000 befestigbares Strukturbauteil 104 sein. Wie am besten in Fig. 5 erkennbar ist, ist die Bauteilanordnung 100 in einem Türbereich des Luftfahrzeugs 1000, d. h. in einem zu einer Passagiertür 106 benachbarten Bereich einer Kabinendecke verbaut. In dem Türbereich des Luftfahrzeugs 1000 sind ferner eine Bordküche 108, eine Trennwand 109 und ein Sanitärmodul 110 verbaut, sodass für eine Demontage des Bauteils 102 zu Reparatur- und/oder Wartungszwecken ein lediglich sehr begrenzter Montageraum zur Verfügung steht.

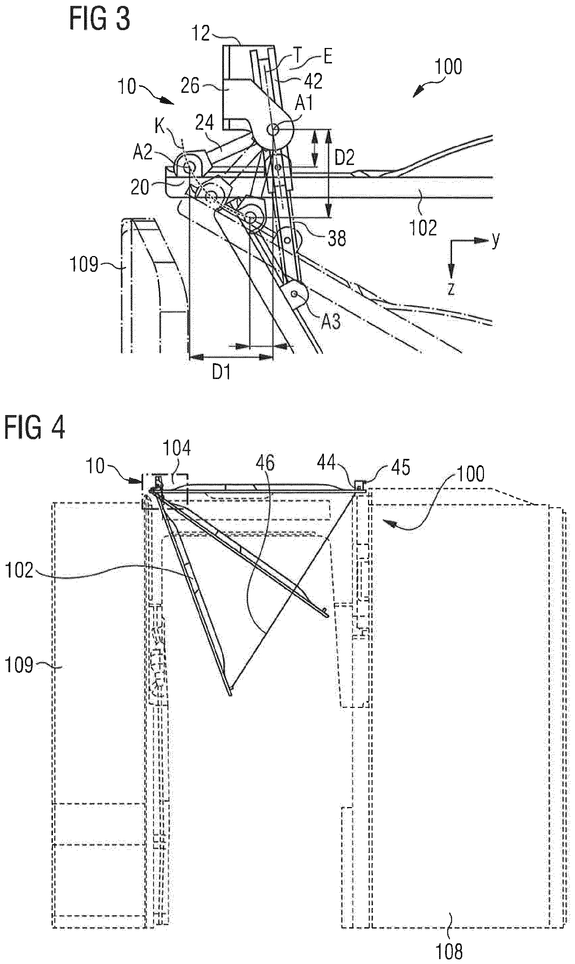

Das Befestigungssystem 10 umfasst ein Strukturhalteelement 12, das, wie in den Figuren 3 und 4 gezeigt, an dem Strukturbauteil 104 befestigbar ist. Das Strukturhalteelements 12 umfasst ein Basiselement 14 mit einem ersten Abschnitt 16 sowie einem sich im Wesentlichen senkrecht zu dem ersten Abschnitt 16 erstreckenden zweiten Abschnitt 18. Der erste Abschnitt 16 des Basiselements 14 umfasst eine dem zweiten Abschnitt 18 des Basiselements 14 zugewandte erste Oberfläche sowie eine seiner ersten Oberfläche gegenüberliegende zweite Oberfläche, die sich vorzugsweise im Wesentlichen parallel zu der ersten Oberfläche erstreckt. Entsprechend umfasst der zweite Abschnitt 18 des Basiselements 14 eine dem ersten Abschnitt 16 des Basiselements 14 zugewandte erste Oberfläche sowie eine seiner ersten Oberfläche gegenüberliegende und sich im Wesentlichen parallel zu der ersten Oberfläche erstreckende zweite Oberfläche. Im montierten Zustand der Bauteilanordnung 100, d.h. wenn das Strukturhalteelements 12, wie in den Figuren gezeigt, an dem Strukturbauteil 104 angebracht ist, liegt die zweite Oberfläche des zweiten Abschnitts 18 des Basiselements 14 an dem Strukturbauteil 104 an, wohingegen sich der erste Abschnitt 16 des Basiselements 14 im Wesentlichen senkrecht von dem Strukturbauteil 104 erstreckt.

Ferner umfasst das Befestigungssystem 10 ein Bauteilhalteelement 20, das an dem zu befestigenden Bauteil 102 befestigbar ist. Das Bauteilhalteelement 20 umfasst eine Grundplatte 22, die eine erste Oberfläche sowie eine der ersten Oberfläche gegenüberliegende und sich im Wesentlichen parallel zu der ersten Oberfläche erstreckende zweite Oberfläche hat. Wenn das Bauteilhalteelement 20, wie in den Figuren gezeigt, an dem Bauteil 102 befestigt ist, liegt die zweite Oberfläche der Grundplatte 22 an dem Bauteil an, während die erste Oberfläche der Grundplatte 22 von dem Bauteil 102 abgewandt ist.

Das Befestigungssystem 10 umfasst ferner ein erstes Hebelelement 24, das um eine erste Drehachse A1 drehbar mit dem Strukturhalteelement 12 verbunden ist. Ferner ist das erste Hebelelement 24 um eine zweite Drehachse A2 drehbar mit dem Bauteilhalteelement 20 verbunden. Insbesondere ist das erste Hebelelement 24 im Bereich eines ersten Endes um die erste Drehachse A1 drehbar mit einem zweiten Hebelelement 26 des Strukturhalteelements 12 verbunden. Im Bereich eines dem ersten Ende gegenüber liegenden zweiten Endes ist das erste Hebeelement 24 dagegen um die zweite Drehachse A2 drehbar mit der Grundplatte 22 des Bauteilhalteelements 20 verbunden.

Das zweite Hebelelement 26 des Strukturhalteelements 12 ist starr mit dem Basiselement 14 des Strukturhalteelements 12 verbunden und erstreckt sich von der dem zweiten Abschnitt 18 des Basiselements 14 zugewandten ersten Oberfläche des ersten Abschnitts 16 des Basiselements 14. Ferner hat das zweite Hebelelement 26 zwei sich im Wesentlichen parallel zueinander erstreckende Arme 28, 30, die im Bereich ihrer von dem ersten Abschnitt 16 des Basiselements 14 abgewandten freien Enden durch die erste Drehachse A1 miteinander verbunden sind.

Zur Befestigung des ersten Hebelelements 24 an der Grundplatte 22 des Bauteilhalteelements 20 ist an der Grundplatte 22 eine erste Aufnahmeeinrichtung 32 versehen, die sich von der ersten Oberfläche der Grundplatte 22 des Bauteilhalteelements 20 erstreckt. Ähnlich wie das zweite Hebelelement 26, hat auch die erste Aufnahmeeinrichtung 32 zwei sich im Wesentlichen parallel zueinander erstreckende Arme 34, 36, die im Bereich ihrer von der Grundplatte 22 abgewandten freien Enden durch die zweite Drehachse A2 miteinander verbunden sind und das zweite Ende des ersten Hebelelements 24 umgreifen, um das erste Hebelelement 24 sicher mit dem Bauteilhalteelement 20 zu verbinden.

Ferner umfasst das Befestigungssystem 10 ein Verbindungselement 38. Das Verbindungselement 38 ist, ebenso wie das erste Hebelelement 24, sowohl mit dem Bauteilhalteelement 20 als auch mit dem Strukturhalteelement 12 verbunden. Insbesondere ist das Verbindungselement 38 um eine dritte Drehachse A3 drehbar mit dem Bauteilhalteelement 20 verbunden. Zur Verbindung des Verbindungselements 38 mit dem Bauteilhalteelement 20 ist an dem Bauteilhalteelement 20 eine zweite Aufnahmeeinrichtung 40 vorgesehen, die sich von der ersten Oberfläche der Grundplatte 22 des Bauteilhalteelements 20 erstreckt. Anders als die erste Aufnahmeeinrichtung 32 ist die zweite Aufnahmeeinrichtung 40 lediglich einarmig ausgebildet und wird von der dritten Drehachse A3 durchsetzt. Bei der in den Figuren gezeigten Ausführungsform eines Befestigungssystems 10 erstrecken sich die erste, die zweite und die dritte Drehachse A1, A2, A3 im Wesentlichen parallel zueinander.

Mit dem Strukturhalteelement 12 ist das Verbindungselement 38 dagegen derart verbunden, dass das Verbindungselement 38 relativ zu dem Strukturhalteelement 12 translatorisch in einer Ebene E verschiebbar ist, die sich im Wesentlichen senkrecht zu der zweiten Drehachse A2 erstreckt. Um eine geführte translatorische Verschiebung des Verbindungselements 38 relativ zu dem Strukturhalteelement 12 zu ermöglichen, ist an dem Strukturhalteelement 12 eine Führungsschiene 42 vorgesehen, in dem zumindest einen Abschnitt des Verbindungselements 38 aufgenommen ist.

Die Führungsschiene 42 ist an dem zweiten Abschnitt 18 des Basiselements 14, d.h. an der ersten Oberfläche des zweiten Abschnitts 18 des Basiselements 14 ausgebildet und erstreckt sich damit in der zu der zweiten Drehachse A2 im Wesentlichen senkrechten Ebene E. Ferner ist die Führungsschiene 42 derart an dem zweiten Abschnitt 18 des Basiselements 14 befestigt, dass sie eine Verlängerung der ersten Drehachse A1 schneidet. Die Führungsschiene 42 weist zwei sich im Wesentlichen parallel zueinander erstreckende Schienenelemente auf. Eines der Schienenelemente ist integriert mit dem zweiten Abschnitt 18 des Basiselements 14 ausgebildet, während das andere der Schienenelemente separat von dem zweiten Abschnitt 18 des Basiselements 14 ausgebildet und an der ersten Oberfläche des zweiten Abschnitts 18 des Basiselements 14 angebracht ist. In jedem der Schienenelemente ist eine Nut vorgesehen, die mit einem komplementären an dem Verbindungselement 38 vorgesehenen Vorsprung zusammenwirkt.

Wie am besten aus Fig. 4 deutlich wird, ist das Bauteil 102 der Bauteilanordnung 100 mittels des Befestigungssystems 10 im Bereich eines ersten Randabschnitts des Bauteils 102 mit dem Strukturbauteil 104 verbunden. Gegebenenfalls können entlang des ersten Randabschnitts des Bauteils 102 auch mehrere Befestigungssysteme 10 vorgesehen sein.

Das Befestigungssystem 10 umfasst ferner ein in Fig. 4 lediglich schematisch angedeutetes Verriegelungssystem 44, das dazu dient, das Bauteil 102 im Bereich eines dem ersten Randabschnitt des Bauteils 102 gegenüberliegenden zweiten Randabschnitts lösbar zu verriegeln. Das Verriegelungssystem 44 umfasst ein erstes Verriegelungselement, das im Bereich des zweiten Randabschnitts des Bauteils 102 mit dem Bauteil 102 verbindbar ist. Ferner umfasst das Verriegelungssystem ein zu dem ersten Verriegelungselement komplementäres zweites Verriegelungselement, das an einer Strukturkomponente 45 anbringbar ist. Bei der Strukturkomponente 45 kann es sich um eine Komponente der Primärstruktur des Luftfahrzeugs 1000, aber auch um eine lastübertragend mit der Primärstruktur des Luftfahrzeugs 1000 verbundene Komponente handeln. Falls gewünscht, können in der Baugruppe 100 entlang des zweiten Randabschnitts des Bauteils 102 auch mehrere Verriegelungssysteme 44 vorgesehen sein.

Schließlich umfasst das Befestigungssystem 10 ein Halteband 46 mit einem ersten Ende und einem zweiten Ende. Das erste Ende des Haltebands 46 mit dem Bauteil 102 verbindbar. Insbesondere ist das Halteband im Bereich des zweiten Randabschnitts des Bauteils 102 mit dem Bauteil 102 verbindbar, der dem mit dem Bauteilhalteelement 12 des Befestigungssystems 10 verbindbaren ersten Randabschnitt des Bauteils 102 gegenüberliegt. Das zweite Ende des Haltebands 46 ist dagegen mit der Strukturkomponente 45 verbindbar. Bei der in den Figuren gezeigten Variante eines Befestigungssystems 10 ist das Halteband 46 in Form eines ausziehbaren Haltebands 46 mit automatischer Einzugsfunktion ausgeführt.

Wie am besten aus den Figuren 1 bis 3 ersichtlich wird, ist das Bauteilhalteelement 20 relativ zu dem Strukturhalteelement 12 zwischen einer ersten Betriebsposition (siehe Fig. 1) und einer zweiten Betriebsposition (siehe Fig. 2) bewegbar. Wenn das Bauteilhalteelement 20 relativ zu dem Strukturhalteelement 12 in seiner ersten Betriebsposition angeordnet ist, befindet sich das mit dem Bauteilhalteelement 20 verbundene Bauteil 102 der Bauteilanordnung 100 in einer Normalbetriebsposition, in der es einen zwischen dem Bauteil 102 und einer Luftfahrzeugaußenhaut liegenden Komponenteneinbauraum von einem Passagierbereich der Luftfahrzeugkabine trennt. Das Bauteil 102 ist dann mithilfe des Verriegelungssystems 44 lösbar in seiner Normalbetriebsposition verriegelt.

Im Gegensatz befindet sich das mit dem Bauteilhalteelement 20 verbundene Bauteil 102 in einer Zugangsbetriebsposition, wenn das Bauteilhalteelement 20 relativ zu dem Strukturhalteelement 12 in seiner zweiten Betriebsposition angeordnet ist. Das Verriegelungssystem 44 ist dann entriegelt, sodass der zweite Randabschnitt des Bauteils 102 von der Strukturkomponente 45 gelöst ist. Die schwerkraftgetriebene Bewegung des Bauteils 102, d. h. des zweiten Randabschnitts des Bauteils 102 relativ zu dem Strukturbauteil 104 und der Strukturkomponente 45 nach unten wird jedoch durch das Halteband 46 begrenzt. In seiner Zugangsposition gibt das Bauteil 102 einen Zugang aus dem Passagierbereich der Luftfahrzeugkabine zu dem zwischen dem Bauteil 102 und der Luftfahrzeugaußenhaut liegenden Komponenteneinbauraum frei. Dadurch werden Reparatur- und Wartungsarbeiten an den in dem Komponenteneinbauraum verbauten Komponenten ermöglicht. Falls gewünscht, kann das Halteband 46 auch gelöst werden, um eine weitere Bewegung des Bauteilhalteelements 102 zu ermöglichen.

Bei einer Überführung des Bauteilhalteelements 20 aus seiner ersten Betriebsposition in seine zweite Betriebsposition wird das erste Hebelelement 24 um die erste Drehachse A1 relativ zu dem Strukturhalteelement 12 bzw. relativ zu dem zweiten Hebelelement 26 des Strukturhalteelements 12 gedreht. Dabei vergrößert sich in der in den Figuren gezeigten Ausführungsform eines Befestigungssystems 10 ein zwischen dem ersten und dem zweiten Hebelelement 24, 26 definierter Winkel von ca. 60° auf ca. 110°. Gleichzeitig wird das erste Hebelelement 24 um die zweite Drehachse A2 relativ zu dem Bauteilhalteelement 20 gedreht. Dabei vergrößert sich in der in den Figuren gezeigten Ausführungsform eines Befestigungssystems 10 ein zwischen dem ersten Hebelelement 24 und der Grundplatte 22 des Bauteilhalteelements 20 definierter Winkel von ca. 30° auf ca. 65°.

Das Verbindungselement 38 führt bei einer Überführung des Bauteilhalteelements 20 aus seiner ersten Betriebsposition in seine zweite Betriebsposition eine Drehung um die dritte Drehachse A3 aus. Dabei verkleinert sich in der in den Figuren gezeigten Ausführungsform eines Befestigungssystems 10 ein Winkel, den das Verbindungselement 38 mit der Grundplatte 22 des Bauteilhalteelements 20 bildet von ca. 80° auf ca. 25°.

Darüber hinaus wird das Verbindungselement 38, durch die Führungsschiene 42 geführt, translatorisch entlang einer Bewegungsbahn T in der zu der zweiten Drehachse A2 senkrechten Ebene E relativ zu dem Strukturhalteelement 12 verschoben. Dadurch wird auch die zweite Drehachse A2 bei einer Überführung des Bauteilhalteelements 20 aus seiner ersten Betriebsposition in seine zweite Betriebsposition in der Ebene E verschoben, die sich senkrecht zu der zweiten Drehachse A2 erstreckt. Dementsprechend wird auch das mit dem Bauteilhalteelement 20 verbundene Bauteil 102 bei einer Überführung des Bauteilhalteelements 20 aus seiner ersten Betriebsposition in seine zweite Betriebsposition ebenfalls in der sich senkrecht zu der zweiten Drehachse A2 erstreckenden Ebene E verschoben und gleichzeitig um die zweite Drehachse A2 relativ zu dem Strukturhalteelement 12 gedreht bzw. geschwenkt.

Bei dem in den Figuren gezeigten Befestigungssystem 10 ist das Verbindungselement 38 derart translatorisch relativ zu dem Strukturhalteelement 12 verschiebbar mit dem Strukturhalteelement 12 verbunden, dass die zweite Drehachse A2 bei einer Überführung des Bauteilhalteelements 20 aus seiner ersten Betriebsposition in seine zweite Betriebsposition in der Ebene E entlang einer kreisbogenförmigen Bewegungsbahn K bewegt wird. Der erste Randabschnitt des mit dem Bauteilhalteelement 20 verbundenen Bauteils 102 wird dementsprechend bei einer Überführung des Bauteilhalteelements 20 aus seiner ersten Betriebsposition in seine zweite Betriebsposition ebenfalls entlang einer kreisbogenförmigen Bewegungsbahn relativ zu dem Strukturhalteelement 12 bewegt und gleichzeitig um die zweite Drehachse A2 relativ zu dem Strukturhalteelement 12 gedreht bzw. geschwenkt.

Darüber hinaus ist das Verbindungselement 38 derart translatorisch relativ zu dem Strukturhalteelement 12 verschiebbar mit dem Strukturhalteelement 12 verbunden, dass sich bei einer Überführung des Bauteilhalteelements 20 aus seiner ersten Betriebsposition in seine zweite Betriebsposition ein erster Abstand D1 zwischen der ersten und der zweiten Drehachse A1, A2 in einer zu der zweiten Drehachse A2 senkrechten ersten Richtung y verkleinert und ein zweiter Abstand D2 zwischen der ersten und der zweiten Drehachse A1, A2 in einer zu der zweiten Drehachse A2 und der ersten Richtung y senkrechten zweiten Richtung z vergrößert. Infolgedessen wird ein mit dem Verbindungselement 38 verbundener Bereich des Bauteilhalteelements 20 von dem Strukturhalteelement 12 entfernt.

Gleichzeitig resultieren die Drehbewegung des ersten Hebelelements 24 um die erste Drehachse A1 und die Drehbewegung des ersten Hebelelements 24 um die zweite Drehachse A2 in einer Annäherung der zweiten Drehachse A2 an die erste Drehachse A1 in der zu der zweiten Drehachse A2 und der ersten Richtung senkrechten zweiten Richtung. Das Bauteil 102 wird dementsprechend bei einer Überführung des Bauteilhalteelements 20 aus seiner ersten Betriebsposition in seine zweite Betriebsposition gleichzeitig zu seiner Drehung um die zweite Drehachse A2 in der zweiten Richtung z von dem Strukturbauteil 104 (nach unten) wegbewegt und in der ersten Richtung y (nach vorne) auf die erste Drehachse A1 zu bewegt.

Schließlich ist das Verbindungselement 38 derart translatorisch relativ zu dem Strukturhalteelement 12 verschiebbar mit dem Strukturhalteelement 12 verbunden, dass die translatorische Bewegungsbahn T, entlang derer das Verbindungselement 38 bei einer Überführung des Bauteilhalteelements 20 aus seiner ersten Betriebsposition relativ zu dem Strukturhalteelement 12 verschoben wird, eine Verlängerung der ersten Drehachse A1 schneidet.

Wie insbesondere aus Fig. 4 deutlich wird, ist es zur Überführung des Bauteils 102 aus seiner Normalbetriebsposition in seine Zugangsposition zunächst erforderlich, das Verriegelungssystem 44 zu entriegeln. Dadurch wird der zweite Randabschnitt des Bauteils 102 von der Strukturkomponente 45 gelöst und schwenkt schwerkraftgetrieben nach unten, wobei die Bewegung des zweiten Randabschnitts des Bauteils 102 durch das Halteband 46 begrenzt wird. Gleichzeitig wird die Kinematik des Befestigungssystems 10 aktiviert, sodass das Bauteilhalteelement 20 des Befestigungssystems, wie oben beschrieben, aus seiner ersten Betriebsposition in seine zweite Betriebsposition überführt wird.

Infolgedessen wird auch das Bauteil 102, d. h. der erste Randabschnitts des Bauteils 102, wie oben beschrieben, gleichzeitig zu seiner Drehung um die zweite Drehachse A2 in der zweiten Richtung z von dem Strukturbauteil 104 (nach unten) wegbewegt und in der ersten Richtung y (nach vorne) auf die erste Drehachse A1 zu aus seiner Normalbetriebsposition in seine Zugangsposition bewegt. Dadurch kann das Bauteil 102 auch dann auf einfache und komfortable Art und Weise aus seiner Normalbetriebsposition in seine Zugangsposition überführt werden, wenn die benachbart zu dem Bauteil verbauten Elemente 108, 110 den Bewegungsfreiraum des Bauteils 102 bei der Überführung aus seiner Normalbetriebsposition in seine Zugangsposition einengen und beispielsweise eine reine Schwenkbewegung des Bauteils 102 um die zweite Drehachse A2 des Befestigungssystems 10 behindern würden.

## Patentansprüche

1. Befestigungssystem (10), das umfasst:
- ein Strukturhalteelement (12), das an einem Strukturbauteil (104) befestigbar ist;
- ein Bauteilhalteelement (20), das an einem zu befestigenden Bauteil (102) befestigbar und relativ zu dem Strukturhalteelement (12) zwischen einer ersten Betriebsposition und einer zweiten Betriebsposition bewegbar ist;
- ein erstes Hebelelement (24), das um eine erste Drehachse (A1) drehbar mit dem Strukturhalteelement (12) verbunden ist und das um eine zweite Drehachse (A2) drehbar mit dem Bauteilhalteelement (20) verbunden ist; und
- ein Verbindungselement (38), das um eine dritte Drehachse (A3) drehbar mit dem Bauteilhalteelement (20) verbunden ist und das derart translatorisch relativ zu dem Strukturhalteelement (12) verschiebbar mit dem Strukturhalteelement (12) verbunden ist, dass die zweite Drehachse (A2) bei einer Überführung des Bauteilhalteelements (20) aus seiner ersten Betriebsposition in seine zweite Betriebsposition in einer Ebene (E) verschoben wird, die sich senkrecht zu der zweiten Drehachse (A2) erstreckt,
**dadurch gekennzeichnet, dass** das Verbindungselement (38) derart translatorisch relativ zu dem Strukturhalteelement (12) verschiebbar mit dem Strukturhalteelement (12) verbunden ist, dass eine translatorische Bewegungsbahn (T), entlang derer das Verbindungselement (38) bei einer Überführung des Bauteilhalteelements (20) aus seiner ersten Betriebsposition relativ zu dem Strukturhalteelement (12) verschoben wird, eine Verlängerung der ersten Drehachse (A1) schneidet.

2. Befestigungssystem (10) gemäß Anspruch 1,
wobei das Verbindungselement (38) derart translatorisch relativ zu dem Strukturhalteelement (12) verschiebbar mit dem Strukturhalteelement (12) verbunden ist, dass die zweite Drehachse (A2) bei einer Überführung des Bauteilhalteelements (20) aus seiner ersten Betriebsposition in seine zweite Betriebsposition in der Ebene (E) entlang einer kreisbogenförmigen Bewegungsbahn (K) bewegt wird.

3. Befestigungssystem (10) gemäß Anspruch 1 oder 2,
wobei das Verbindungselement (38) derart translatorisch relativ zu dem Strukturhalteelement (12) verschiebbar mit dem Strukturhalteelement (12) verbunden ist, dass sich bei einer Überführung des Bauteilhalteelements (20) aus seiner ersten Betriebsposition in seine zweite Betriebsposition ein erster Abstand (D1) zwischen der ersten und der zweiten Drehachse (A1, A2) in einer zu der ersten und der zweiten Drehachse (A1, A2) senkrechten ersten Richtung (y) verkleinert und ein zweiter Abstand (D2) zwischen der ersten und der zweiten Drehachse (A1, A2) in einer zu der ersten und der zweiten Drehachse (A1, A2) sowie der ersten Richtung (y) senkrechten zweiten Richtung (z) vergrößert.

4. Befestigungssystem (10) gemäß einem der Ansprüche 1 bis 3,
wobei das Strukturhalteelement (12) umfasst:
- ein Basiselement (14) und
- ein zweites Hebelelement (26), wobei das erste Hebelelement (24) um die erste Drehachse (A1) drehbar mit dem zweiten Hebelelement (26) verbunden ist und/oder wobei das zweite Hebelelement (26) starr mit dem Basiselement (14) verbunden ist und/oder wobei das zweite Hebelelement (26) zwei sich im Wesentlichen parallel zueinander erstreckende Arme (28, 30) umfasst, die im Bereich ihrer freien Enden durch die erste Drehachse (A1) miteinander verbunden sind.

5. Befestigungssystem (10) gemäß Anspruch 4, wobei das Basiselement (14) einen mit dem zweiten Hebelelement (26) verbundenen ersten Abschnitt (16) sowie einen zweiten Abschnitt (18) umfasst, wobei sich der zweite Abschnitt (18) im Wesentlichen senkrecht zu dem ersten Abschnitt (16) und zur ersten Drehachse (A1) erstreckt.

6. Befestigungssystem (10) gemäß einem der Ansprüche 1 bis 5,
wobei zumindest ein Abschnitt des Verbindungselements (38) verschiebbar in einer an dem Strukturhalteelement (12) ausgebildeten Führungsschiene (42) aufgenommen ist.

7. Befestigungssystem (10) gemäß den Ansprüchen 5 und 6,
wobei die Führungsschiene (42) mit dem zweiten Abschnitt (18) des Basiselements (14) verbunden ist und/oder wobei sich die Führungsschiene (42) in der zu der zweiten Drehachse (A2) senkrechten Ebene (E) erstreckt und/oder wobei die Führungsschiene (42) eine Verlängerung der ersten Drehachse (A1) schneidet.

8. Befestigungssystem (10) gemäß einem der Ansprüche 1 bis 7,
wobei das Bauteilhalteelement (20) umfasst:
- eine Grundplatte (22),
- eine mit dem ersten Hebelelement (24) verbundene erste Aufnahmeeinrichtung (32) und
- eine mit dem Verbindungselement (38) verbundene zweite Aufnahmeeinrichtung (40).

9. Befestigungssystem (10) gemäß Anspruch 8,
wobei die erste Aufnahmeeinrichtung (32) zwei sich im Wesentlichen parallel zueinander erstreckende Arme (34, 36) umfasst, die im Bereich ihrer freien Enden durch die zweite Drehachse (A2) miteinander verbunden sind.

10. Befestigungssystem (10) gemäß einem der Ansprüche 1 bis 9,
das ferner ein Verriegelungssystem (44) umfasst, das dazu eingerichtet ist, das Bauteil (102) lösbar in seiner Normalbetriebsposition zu verriegeln.

11. Befestigungssystem (10) gemäß einem der Ansprüche 1 bis 10,
das ferner ein Halteband (46) mit einem ersten Ende und einem zweiten Ende umfasst, wobei das erste Ende des Haltebands (46) mit dem Bauteil (102) verbindbar ist und das zweite Ende des Haltebands (46) mit einer Strukturkomponente (45) verbindbar ist, so dass das Halteband (46) dazu eingerichtet ist, bei einer Überführung des Bauteils (102) aus seiner Normalbetriebsposition in seine Zugangsposition die Bewegung des Bauteils (102) relativ zu dem Strukturbauteil (104) zu begrenzen.

12. Bauteilanordnung (100), die umfasst:
- ein Bauteil (102); und
- ein Strukturbauteil (104), wobei das Bauteil (102) durch mindestens ein Befestigungssystem (10) nach einem der Ansprüche 1 bis 11 zwischen einer Normalbetriebsposition und einer Zugangsposition bewegbar an dem Strukturbauteil (104) befestigt ist.

13. Bauteilanordnung (100) gemäß Anspruch 12,
wobei das Befestigungssystem (10) das Bauteil (102) im Bereich eines ersten Randabschnitts des Bauteils (102) mit dem Strukturbauteil (104) verbindet und/oder wobei das Verriegelungssystem (44) und/oder das Halteband (46) des Befestigungssystems das Bauteil (102) im Bereich eines dem ersten Randabschnitts gegenüber liegenden zweiten Randabschnitts des Bauteils (102) mit einer Strukturkomponente (45) verbindet/verbinden.

14. Luftfahrzeug (1000), das ein Befestigungssystem (10) gemäß einem der Ansprüche 1 bis 11 und/oder eine Bauteilanordnung (100) gemäß Anspruch 12 oder 13 umfasst.

## Claims

1. Fastening system (10) comprising:
- a structure-holding element (12), which can be fastened on a structural unit (104);
- a unit-holding element (20), which can be fastened on a unit (102) to be fastened and which can be moved relative to the structure-holding element (12) between a first operating position and a second operating position;
- a first lever element (24), which is connected to the structure-holding element (12) for rotation about a first axis-of-rotation element (A1) and which is connected to the unit-holding element (20) for rotation about a second axis-of-rotation element (A2); and
- a connecting element (38), which is connected to the unit-holding element (20) for rotation about a third axis-of-rotation element (A3) and which is connected to the structure-holding element (12) for displacement in translatory fashion relative to the structure-holding element (12) in such a manner that, when the unit-holding element (20) is being transferred from its first operating position into its second operating position, the second axis-of-rotation element (A2) is displaced in a plane (E) which extends perpendicularly in relation to the second axis-of-rotation element (A2),
**characterized in that** the connecting element (38) is connected to the structure-holding element (12) for displacement in translatory fashion relative to the structure-holding element (12) in such a manner that a translatory movement path (T), along which the connecting element (38) is displaced relative to the structure-holding element (12) when the unit-holding element (20) is being transferred from its first operating position, intersects an extension of the first axis-of-rotation element (A1).

2. Fastening system (10) according to Claim 1,
wherein the connecting element (38) is connected to the structure-holding element (12) for displacement in translatory fashion relative to the structure-holding element (12) in such a manner that, when the unit-holding element (20) is being transferred from its first operating position into its second operating position, the second axis-of-rotation element (A2) is moved along an arcuate movement path (K) in the plane (E).

3. Fastening system (10) according to Claim 1 or 2,
wherein the connecting element (38) is connected to the structure-holding element (12) for displacement in translatory fashion relative to the structure-holding element (12) in such a manner that, when the unit-holding element (20) is being transferred from its first operating position into its second operating position, a first distance (D1) between the first and the second axis-of-rotation elements (A1, A2) decreases in a first direction (y), which is perpendicular in relation to the first and the second axis-of-rotation elements (A1, A2), and a second distance (D2) between the first and the second axis-of-rotation elements (A1, A2) increases in a second direction (z), which is perpendicular in relation to the first and the second axis-of-rotation elements (A1, A2) and to the first direction (y).

4. Fastening system (10) according to one of Claims 1 to 3,
wherein the structure-holding element (12) comprises:
- a basic element (14) and
- a second lever element (26), wherein the first lever element (24) is connected to the second lever element (26) for rotation about the first axis-of-rotation element (A1) and/or wherein the second lever element (26) is connected rigidly to the basic element (14) and/or wherein the second lever element (26) comprises two arms (28, 30), which extend essentially parallel to one another and, in the region of their free ends, are connected to one another by the first axis-of-rotation element (A1).

5. Fastening system (10) according to Claim 4,
wherein the basic element (14) comprises a first portion (16), which is connected to the second lever element (26), and also a second portion (18), wherein the second portion (18) extends essentially perpendicularly in relation to the first portion (16) and to the first axis-of-rotation element (A1).

6. Fastening system (10) according to one of Claims 1 to 5,
wherein at least one portion of the connecting element (38) is received in a displaceable manner in a guide rail (42), which is formed on the structure-holding element (12).

7. Fastening system (10) according to Claims 5 and 6,
wherein the guide rail (42) is connected to the second portion (18) of the basic element (14) and/or wherein the guide rail (42) extends in the plane (E), which is perpendicular in relation to the second axis-of-rotation element (A2), and/or wherein the guide rail (42) intersects an extension of the first axis-of-rotation element (A1).

8. Fastening system (10) according to one of Claims 1 to 7,
wherein the unit-holding element (20) comprises:
- a base plate (22),
- a first receiving device (32), which is connected to the first lever element (24), and
- a second receiving device (40), which is connected to the connecting element (38).

9. Fastening system (10) according to Claim 8,
wherein the first receiving device (32) comprises two arms (34, 36), which extend essentially parallel to one another and, in the region of their free ends, are connected to one another by the second axis-of-rotation element (A2).

10. Fastening system (10) according to one of Claims 1 to 9,
also comprising a locking system (44), which is designed to lock the unit (102) in a releasable manner in its normal operating position.

11. Fastening system (10) according to one of Claims 1 to 10,
also comprising a holding band (46) with a first end and a second end, wherein the first end of the holding band (46) can be connected to the unit (102) and the second end of the holding band (46) can be connected to a structural component (45), and therefore the holding band (46) is designed so that, when the unit (102) is being transferred from its normal operating position into its access position, the holding band limits the movement of the unit (102) relative to the structural unit (104).

12. Unit arrangement (100) comprising:
- a unit (102); and
- a structural unit (104), wherein the unit (102) is fastened on the structural unit (104), for movement between a normal operating position and an access position, by means of at least one fastening system (10) according to one of Claims 1 to 11.

13. Unit arrangement (100) according to Claim 12,
wherein the fastening system (10) connects the unit (102) to the structural unit (104) in the region of a first edge portion of the unit (102) and/or wherein the locking system (44) and/or the holding band (46) of the fastening system connect/connects the unit (102) to a structural component (45) in the region of a second edge portion of the unit (102), this second edge portion being located opposite the first edge portion.

14. Aircraft (1000) comprising a fastening system (10) according to one of Claims 1 to 11 and/or a unit arrangement (100) according to Claim 12 or 13.

## Revendications

1. Système de fixation (10), qui comprend :
- un élément de support structurel (12) pouvant être fixé à un composant structurel (104) ;
- un élément de support de composant (20) pouvant être fixé à un composant (102) à fixer et mobile par rapport à l'élément de support structurel (12) entre une première position de fonctionnement et une deuxième position de fonctionnement ;
- un premier élément de levier (24) relié de manière rotative à l'élément de support structurel (12) autour d'un premier axe de rotation (A1) et relié de manière rotative à l'élément de support de composant (20) autour d'un deuxième axe de rotation (A2) ; et
- un élément de liaison (38) qui est relié à l'élément de support de composant (20) de manière rotative autour d'un troisième axe de rotation (A3) et qui est relié à l'élément de support structurel (12) de manière déplaçable en translation par rapport à l'élément de support structurel (12) de telle sorte que le deuxième axe de rotation (A2) est déplacé dans un plan (E) qui s'étend perpendiculairement au deuxième axe de rotation (A2) lors d'un transfert de l'élément de support de composant (20) de sa première position de fonctionnement à sa deuxième position de fonctionnement,
**caractérisé en ce que** l'élément de liaison (38) est relié à l'élément de support structurel (12) de manière déplaçable en translation par rapport à l'élément de support structurel (12) de telle sorte qu'une trajectoire de mouvement en translation (T), le long de laquelle l'élément de liaison (38) est déplacé par rapport à l'élément de support structurel (12) lors d'un transfert de l'élément de support de composant (20) depuis sa première position de fonctionnement, coupe un prolongement du premier axe de rotation (A1).

2. Système de fixation (10) selon la revendication 1,
dans lequel l'élément de liaison (38) est relié à l'élément de support structurel (12) de manière déplaçable en translation par rapport à l'élément de support structurel (12) de telle sorte que le deuxième axe de rotation (A2) est déplacé dans le plan (E) le long d'une trajectoire de mouvement en forme d'arc de cercle (K) lors d'un transfert de l'élément de support de composant (20) de sa première position de fonctionnement à sa deuxième position de fonctionnement.

3. Système de fixation (10) selon la revendication 1 ou 2,
dans lequel l'élément de liaison (38) est relié à l'élément de support structurel (12) de manière déplaçable en translation par rapport à l'élément de support structurel (12) de telle sorte que, lors d'un transfert de l'élément de support de composant (20) de sa première position de fonctionnement à sa deuxième position de fonctionnement, une première distance (D1) entre le premier et le deuxième axe de rotation (A1, A2) diminue dans une première direction (y) perpendiculaire au premier et au deuxième axe de rotation (A1, A2) et une deuxième distance (D2) entre le premier et le deuxième axe de rotation (A1, A2) augmente dans une deuxième direction (z) perpendiculaire au premier et au deuxième axe de rotation (A1, A2) et à la première direction (y).

4. Système de fixation (10) selon l'une quelconque des revendications 1 à 3, dans lequel l'élément de support structurel (12) comprend :
- un élément de base (14) et
- un deuxième élément de levier (26), le premier élément de levier (24) étant relié au deuxième élément de levier (26) de manière rotative autour du premier axe de rotation (A1) et/ou le deuxième élément de levier (26) étant relié de manière rigide à l'élément de base (14) et/ou le deuxième élément de levier (26) comprenant deux bras (28, 30) s'étendant essentiellement parallèlement l'un à l'autre, qui sont reliés entre eux dans la zone de leurs extrémités libres par le premier axe de rotation (A1).

5. Système de fixation (10) selon la revendication 4,
dans lequel l'élément de base (14) comprend une première section (16) reliée au deuxième élément de levier (26) et une deuxième section (18), la deuxième partie (18) s'étendant essentiellement perpendiculairement à la première section (16) et au premier axe de rotation (A1).

6. Système de fixation (10) selon l'une quelconque des revendications 1 à 5, dans lequel au moins une section de l'élément de liaison (38) est reçue de manière déplaçable dans un rail de guidage (42) réalisé sur l'élément de support structurel (12).

7. Système de fixation (10) selon les revendications 5 et 6,
dans lequel le rail de guidage (42) est relié à la deuxième section (18) de l'élément de base (14) et/ou dans lequel le rail de guidage (42) s'étend dans le plan (E) perpendiculaire au deuxième axe de rotation (A2) et/ou dans lequel le rail de guidage (42) coupe un prolongement du premier axe de rotation (A1).

8. Système de fixation (10) selon l'une quelconque des revendications 1 à 7, dans lequel l'élément de support de composant (20) comprend :
- une plaque de base (22),
- un premier dispositif de réception (32) relié au premier élément de levier (24), et
- un deuxième dispositif de réception (40) relié à l'élément de liaison (38).

9. Système de fixation (10) selon la revendication 8,
dans lequel le premier dispositif de réception (32) comprend deux bras (34, 36) s'étendant essentiellement parallèlement l'un à l'autre, qui sont reliés entre eux dans la zone de leurs extrémités libres par le deuxième axe de rotation (A2).

10. Système de fixation (10) selon l'une quelconque des revendications 1 à 9,
qui comprend en outre un système de verrouillage (44) adapté pour verrouiller de manière libérable le composant (102) dans sa position de fonctionnement normale.

11. Système de fixation (10) selon l'une quelconque des revendications 1 à 10,
qui comprend en outre une bande de retenue (46) ayant une première extrémité et une deuxième extrémité, la première extrémité de la bande de retenue (46) pouvant être reliée au composant (102) et la deuxième extrémité de la bande de retenue (46) pouvant être reliée à une pièce structurelle (45), de telle sorte que la bande de retenue (46) est adaptée pour limiter le mouvement du composant (102) par rapport au composant structurel (104) lors du transfert du composant (102) de sa position de fonctionnement normale à sa position d'accès.

12. Agencement de composants (100), qui comprend :
- un composant (102) ; et
- un composant structurel (104), le composant (102) étant fixé de manière mobile au composant structurel (104) par au moins un système de fixation (10) selon l'une quelconque des revendications 1 à 11 entre une position de fonctionnement normal et une position d'accès.

13. Agencement de composants (100) selon la revendication 12,
dans lequel le système de fixation (10) relie le composant (102) dans la zone d'une première section de bord du composant (102) au composant structurel (104) et/ou dans lequel le système de verrouillage (44) et/ou la bande de retenue (46) du système de fixation relie/relient le composant (102) dans la zone d'une deuxième section de bord du composant (102) opposée à la première section de bord à une pièce structurelle (45).

14. Aéronef (1000), qui comprend un système de fixation (10) selon l'une quelconque des revendications 1 à 11 et/ou un agencement de composants (100) selon la revendication 12 ou 13.
